# EUROPEAN PATENT SPECIFICATION

(11) **EP 2 659 379 B1**
(45) Date of publication and mention of the grant of the patent: **03.12.2014**
(21) Application number: 11810805.9
(22) Date of filing: 23.12.2011
(51) Int. Cl.: G06F 12/02

(54) **METHOD AND SYSTEM FOR IMPROVING A CONTROL OF A LIMIT ON WRITING CYCLES OF AN IC CARD**
VERFAHREN UND SYSTEM ZUR VERBESSERUNG EINER STEUERUNG EINER GRENZE FÜR SCHREIBZYKLEN AUF EINER CHIPKARTE
PROCÉDÉ ET SYSTÈME PERMETTANT D'AMÉLIORER UNE COMMANDE D'UNE LIMITE SUR DES CYCLES D'ÉCRITURE D'UNE CARTE IC

(30) Priority: 30.12.2010 IT MI20102475
(43) Date of publication of application: 06.11.2013
(73) Proprietor: STMicroelectronics International N.V., 1118 BH Luchthaven Schiphol (NL)
(72) Inventor: VENEROSO, Amedeo, I-81100 Caserta (IT); VARONE, Francesco, I-81041 Bellona (Caserta) (IT); DI STASIO, Vitantonio, I-81100 Caserta (IT); VASTANO, Pasquale, I-81055 S. Maria Capua Vetere (Caserta) (IT)
(74) Representative: Bosotti, Luciano
(86) International application number: PCT/EP2011/006554
(87) International publication number: WO 2012/089333

(56) References cited:
- EP-A1- 1 936 632
- US-A1- 2007 118 688
- US-A1- 2009 113 121
- US-A1- 2010 180 069
- US-A1- 2010 287 328

## Description

### Field of application

The present invention relates a method and system for improving a control of a limit on writing cycles of an IC Card. More particularly, the present invention relates to a method and system of the type cited above wherein a number of writing cycles executed on a portion of a non volatile memory of an IC Card is counted in order to prevent more than a predetermined number of writings on such portion and thus to prevent a damage to the non volatile memory.

### Prior art

As known, several non volatile memory technologies (such as Electrically Erasable Programmable Read Only Memory EEPROM and Flash) include a plurality of memory portions or memory cells supporting a limited number of writing cycles. More particularly, if the memory cell is written more than a predetermined number of times, i.e. more than a predetermined number of writing cycles are executed on the same cell, it is no more considered reliable; in fact, data therein stored may be lost or an access to the cell denied. For instance, a non volatile memory may be guaranteed to support no more than 100,000 writing cycles on the same cell.

A method to control a limit on writing cycles of the non volatile memory of the IC Card provides a counter, inside the non volatile memory, for counting how many writing cycles are executed on a same cell or portion, for example a counter which is incremented each time a writing cycle occurs on the cell. When the counter reaches a predetermined value, the memory cell is no more considered reliable and a recovery procedure is triggered on the non volatile memory. With reference to the example given above, the predetermined value may be, for example, 50,000.

The documents EP 1936632 A1, US 2007/118688 A1, US 2010/180063 A1, US 2009/113121 A1 and US 2010/287328 A1 disclose the use of wear levelling techniques for non-volatile memories.

However, the known method suffers for the problem that the same non volatile memory wherein the counter value is stored is subject to limitations on the number of writing cycles. Thus, such method is not safe. Moreover, the control of the limitations on the number of writing cycles over a plurality of memory cells, requires that a corresponding plurality of counters associated to the memory cells are allocated; thus, wide areas of the non volatile memory are damaged by the counters, since they are frequently written and rapidly reach the respective limit on writing supported.

The problem at the base of the present invention is to provide a method and a system for controlling the limitation on the number of writing cycles supported by an IC Card which is based on a counter not suffering the same limitation of the other portions of non volatile memory and which has substantially a longer duration, overcoming all the limitation that currently affects the known method and systems.

### Summary of the invention

The solution idea at the base of the present invention is to save, inside the non volatile memory of an IC Card, a counter for controlling limitation on writing cycles of a memory cell or portion, such counter being updated only one time for a predetermined number of writing cycles executed over the corresponding cell or portion. Advantageously, there is a predetermined ratio between a number of writings executed on the non volatile memory of the counter and a number of writings cycles executed on the cell or portions of non volatile memory to be controlled with the counter. More particularly, the life time of the counter is longer than the life time of the memory cell or portion controlled; thus, when the controlled memory cell is exhausted because not capable to support further writings, the counter may be decoupled from such memory cell and associated to another memory cell or portion to be controlled. Advantageously, the memory damaged by the counter, due to the respective writings, is reduced.

According to this solution idea, the technical problem is solved by a method for controlling a number of writing cycles supported by a cell or portion of a non volatile memory of an IC Card, including the steps of-counting write accesses to the memory portion and storing a first counter of the write accesses in another portion of the non volatile memory, characterized by the fact that the first counter is coupled to a second counter or value associated to a RAM (Random Access Memory) of the IC Card, wherein the second counter or value is updated each time the write accesses occur on the cell or portion to be controlled and the first counter is written in another portion of the non volatile memory only when the second counter or value corresponds to a predetermined value.

Advantageously, the second counter or value is not limited by the same hardware constrains of the first counter since it is included in the RAM portion of the IC Card and not in the non volatile memory. Moreover, the access to the RAM is faster and thus the second counter or value may be updated faster that the first counter. This improve the performance of the method for controlling the writing cycles, since the first counter is updated only once for N predetermined updates of the second counter or value.

Further advantages and features of the present invention are apparent from the description given below and from the annexed drawings which are given only for exemplificative purpose and without limiting the scope of protection of the present invention.

### Brief description of the drawings

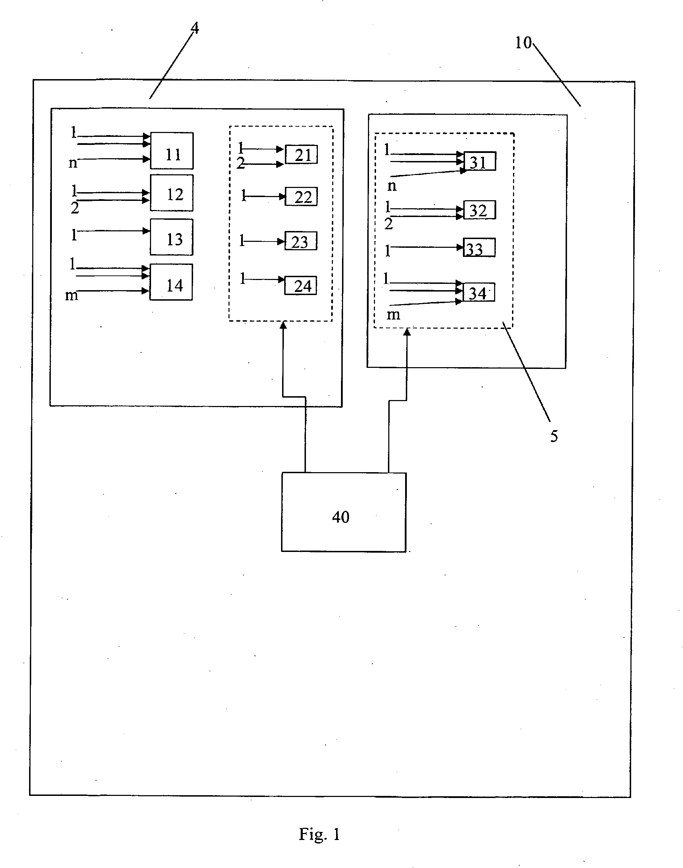

Figure 1 is a block diagram schematically representing the steps of the method of the preset invention.

### Detailed description

With reference to figure 1 it is schematically represented an IC Card 10 according to the present invention, including a non volatile memory 4 and a RAM (Random Access Memory) 5. The non volatile memory 4 comprises a plurality of memory portions or memory cells 11, 12, 13, 14, 21, 22, 23, 24 wherein data are stored and maintained also after the IC Card is powered off; also the RAM comprises a plurality of memory portions or cells 31, 32, 33, 34 wherein data are stored; however, the memory cells of the RAM do not maintain data if the IC Card is powered off. Each non volatile memory portion supports a limited number of writing cycles, for example 100,000 writing cycles, after which the storage or access of data is not guaranteed.

For guaranteeing the reliability of the IC Card, a method is provided which controls a limitation of the writing cycles on the memory cells or portions of the non volatile memory 4. More particularly, the memory cell 11 is coupled to a first counter 21 storing a value associated to a number of writings on the memory cell, indicating how many times the memory cell has been involved in a writing cycle. Also the value of the first counter 21 is stored in the non volatile memory 4 and thus it is subject to the same memory constrains, i.e. to the same limitation of the writing cycles, of the memory cell 11. More particularly, the method for controlling the number of writing cycles supported by the cell or portion 11, includes the steps of counting write accesses to the memory cell or portion 11 and associating the first counter 21 to another portion 21 of the non volatile memory 4.

According to the present invention, the method comprises coupling the first counter 21 to a second counter or value 31 associated to the RAM 5 of the IC Card. The second counter 31 is updated each time the write accesses occur on the cell or portion to be controlled and the first counter 21 is written in said another portion 21 of non volatile memory 4 only when the second counter or value 31 corresponds to a predetermined value.

Advantageously, the second counter 31 in the RAM 5 is not subject to the same memory constrains, i.e. to the same limitation on the number of writing cycles, of the first counter 21 in non volatile memory 4. According to the method, the number of writings executed on the first counter 21 is less than the number of writings executed on the memory portion 11 to which it is associated for control. Thus, when the memory portion 11 is considered to be unreliable because it has been written a number of times substantially corresponding to the supported limit, the first counter 21 may be reused to control other memory cells or portions. These avoids damaging areas of non volatile memory 4, since a same memory portion of non volatile memory 4 used for the first counter 21 is reused for controlling several memory cells or portions 11, 12, 13, 14 of the same non volatile memory portion 4.

According to an aspect of the present invention, the update of the second counter 31 comprises incrementing a value of the second counter 31 from a lower value x to an upper value y or decrementing the value from an upper value y to a lower value x. When the upper value y is reached in case of increment or the lower value x is reached in case of decrement, the second counter 31 is reset to the lower value x or the upper value y, respectively. For instance, the predetermined value of the second counter 31 which triggers the writing of the first counter 21 corresponds to the upper value x or the lower value y, respectively. For example, the lower limit x is 0, the upper limit y is 100 and the second counter 31 is incremented with a step of 1 for each writings on the memory portion 11 to which the first counter 21 is associated. In this case, the first counter 21 is written once for each hundred of updates on the second counter 31. In other words, the writings of the first counter 21 are 1 / 100 of the updates executed on the second counter 31 and 1 / 100 of the writing cycles on the cell or portion 11 of the non volatile memory 4. More particularly, according to this aspect of the invention, the writings of the first counter 21 are 1/(y-x) the updates of the second counters 31. In case the second counter 31 counts from 1 to n, the number of writings of the first counter 21 in the corresponding portion 21 of non volatile memory 4 is 1 / n times the number of updates of the second counter 31.

According to another aspect of the present invention, the value 31 is selected among a prescribed plurality of values, wherein a predetermined selected value of such prescribed plurality of values triggers the writing of the first counter 21. More particularly, the value 31 is randomly selected between m values of the prescribed plurality of values; thus a number of writings of the first counter 21 in the corresponding portion 21 of non volatile memory substantially correspond to 1/m times a number of updates of the value 31. In fact, the probability of randomly selecting the predetermined value among the prescribed plurality of values m is 1/m.

Advantageously, according to this aspect of the present invention, it is not required to store the value 31 and to increment it at each writing cycles of the portion 11 to be controlled; in fact, at each writing cycle of such cell or portion 11, the value 31 is randomly selected among the prescribed plurality of value, for example 1..100, and the selected value is compared with the predetermined one of said prescribed plurality of value, for instance the value 57 (fifty seven); if the selected value corresponds to the predetermined value, the first counter 21 is incremented, otherwise the writing cycle of the cell or portion 11 is executed and the first counter 21 is not written. The probability of selecting the predetermined value, i.e. the value 57, among the prescribed plurality of values, i.e. among 1..100, supposing the random generator function to have the property of uniform distribution, is 1 / m (1/100). Statistically, after an execution of 100,000 writing cycles, the first counter 21 is incremented, i.e. it is written, only 100 times. Thus, the corresponding memory portion 21 is not considered unreliable when the controlled memory portion 11 is considered unreliable.

According to an aspect of the invention, each memory cell 11, 12, 13, 14 or portion of the non volatile memory 4 is associated to a corresponding first counter 21, 22, 23, 24 in the non volatile memory 4 and a second counter or value 31, 32, 33, 34 in RAM 5 is coupled to the corresponding first counter 21, 22, 23, 24, for controlling a number of writing cycles supported by the entire non volatile memory 4. Thus, the memory area associated to the first counters 21, 22, 23, 24 which control the other areas 11, 12, 13, 14 of non volatile memory 4 is not subject to a same frequency of writings to which such other areas are exposed.

According to the invention, when the method detects that a memory cell or portion has been written up to the limit, it moves the corresponding data to a less stressed memory cell or portion. In particular, the first counter 21 is compared with a predetermined value L which is associated to a limit of writing cycles supported by the portion 11 of non volatile memory 4, for example L=100,000, and a warning on a maximum data update on the portion 11 is triggered by an application or an operative system of the IC Card, whether the first counter 21 exceeds the predetermined value L. The step of comparing includes taking in consideration a scale factor between the second counter or value 31 and the first counter 21; for example, if the first counter 21 is incremented one time every N updates of said second counter or value 31, the scale factor is N and thus a value T stored in the first counter 21 is multiplied for the scale factor N to retrieve the writing cycles effectively executed on the controlled memory portion 11. For instance, if the scale factor is 100, i.e. the first counter 21 is incremented one time every 100 updates of the second counter or value 31, a value of 13 (thirteen) stored in the first counter corresponds to 13,000 writing cycles in the controlled memory portion 11.

When the memory portion has been written up to the limit, the corresponding data are moved into a different portion of the non volatile memory.

Preferably, the different portion is associated to another first counter 22 having a value not exceeding the predetermined value L, more preferably to the first counter 22 with the lowest value. It is provided that such first counter 22 was associated to another memory portion, for example to the memory portion 12, meanwhile considered unreliable because written up the its respective limit.

The above mentioned technical problem is also solved by a an IC Card 10 according to the present invention, including a non volatile memory 4 and a first counter 21 for counting write accesses to a cell or portion 11 of the non volatile memory 4. The first counter 21 is stored in another portion 21 of the non volatile memory 4, all the portion of such memory 4 being subject to the same memory constrains, i.e. they support a same limited number of writing cycles.

According to the invention, the IC Card 10 comprises a second counter or value 31 coupled to the first counter 21 and included in a RAM 4 of the IC Card 10, and an update logic for updating 40 the second counter or value 31 each time the write accesses occur on the cell or portion to be controlled and for writing the first counter 21 only when the second counter or value 31 corresponds to a predetermined value.

More particularly, the update logic 40 comprises incrementing a value of the second counter 31 from a lower value x to an upper value y or decrementing the value from an upper value y to a lower value x, and writing the first counter 21 only if the second counter 31 corresponds to the upper value y or the lower value x, respectively. In a preferred embodiment, the second counter 31 is set from 1 to n so that a number of writings of the first counter 21 in said another portion 21 of non volatile memory 4 is 1 / n times a number of updates of the second counter 31.

In an aspect of the invention, the update logic 40 comprises selecting a value 31 among a prescribed plurality of values, and writing the first counter 21 when the value 31 corresponds to one specific value of the prescribed plurality of values. More particularly, the update logic includes a random generator of a value 1..m for the value 31 and a comparator, for comparing the randomly selected number with the predetermined among said prescribed plurality of values.

As schematically represented in figure 1, each memory cell or portion 11, 12, 13, 14 of the non volatile memory 4 is associated to a corresponding first counter 21, 22, 23, 24 in the non volatile memory 4 and to a second counter or value 31, 32, 33, 34 in RAM 5 which is coupled to the corresponding first counter 21, 22, 23, 24.

The comparator has in input the first counter 21 and a predetermined value L which is associated to a limit of writing cycles supported by the cell or portion 11 of non volatile memory 4 and a triggers a warning on a maximum data update on the portion 11 if the first counter 21 exceeds the predetermined value. Thus the operative system of the IC Card may move data from the memory cell or portion which is detected to be unreliable to another memory portion.

Advantageously, according to the method and system of the present invention, a predetermined ratio between a number of writings executed on the non volatile memory associated to the first counter and a number of writings executed on the cell or portion of non volatile memory to be controlled with the first counter can be set, thus reducing the stress of the memory portion of the counters. The life time of the counter is longer than the life time of the portion of memory portion controlled; thus, when the controlled memory portion cannot support further writings, i.e. they reach the respective limit of writing cycles, the counter may be decoupled from the memory portion and associated to another memory portion to be controlled. Advantageously, the memory portions associated to counter and damaged due to the writings of the counter is reduced.

Advantageously, the second counter or value is not limited by the same hardware constrains of the first counter since the former is included in the RAM portion of the IC Card and not in the non volatile memory. Advantageously, the access to the RAM is faster and thus the second counter or value may be updated faster that the first counter, improving also the performance of the writing cycle of the controlled non volatile memory portion. This improve the performance of the method for controlling the writing cycles numbers, since the first counter is updated once for N updates of the second counter or value.

## Claims

1. Method for controlling a number of writing cycles supported by a portion (11) of a non volatile memory (4) of a Card (10), including the steps of counting write accesses to said portion of said non volatile memory (11) and storing a first counter (21) of said write accesses in another portion (21) of said non volatile memory, wherein said first counter (21) is coupled to a second counter or value (31) stored into a RAM (5), Random Access Memory, of said Card, wherein the second counter or value (31) is updated each time said write accesses occur on said portion of said non volatile memory (11) to be controlled, **characterized in that** said Card is an IC Card, and **in that** said first counter (21) is written in said another portion of non volatile memory (4) only when said second counter or value (31) corresponds to a predetermined value.

2. Method according to claim 1 wherein said update of the second counter (31) comprises incrementing a value of the second counter (31) from a lower value (x) to an upper value (y) or decrementing the value from an upper value (y) to a lower value (x), said predetermined value corresponding to the upper value (y) or the lower value (x), respectively.

3. Method according to claim 2 wherein said second counter (31) counts from 1 to n and a number of writings of said first counter (21) in said another portion of non volatile memory is 1 / n times a number of updates of said second counter (31).

4. Method according to claim 1 wherein the update of said value (31) comprises selecting a value among a prescribed plurality of values, wherein the predetermined value triggering the writing of said first counter (21) is one of said prescribed plurality of values.

5. Method according to claim 4 wherein said value (31) is randomly selected between m values of said prescribed plurality of values (1...m) and a number of writings of said first counter (21) in said another portion of non volatile memory is 1/m times a number of updates of said value (31).

6. Method according to any one of the previous claims, wherein each memory cell or portion (11, 12, 13, 14) of said non volatile memory (4) is associated to a corresponding first counter (21, 22, 23, 24) in said non volatile memory (4) and a second counter or value (31, 32, 33, 34) in RAM (5) is coupled to the corresponding first counter (21, 22, 23, 24), for controlling a number of writing cycles supported by the non volatile memory (4).

7. The method according to any one of the previous claims wherein the first counter (21) is compared with a predetermined value (L) which is associated to a limit of writing cycles supported by said portion (11) of non volatile memory (4) and a warning on a maximum data update on said portion (11) is triggered by an application or an operative system of said IC Card (10), whether said first counter (21) exceeds said predetermined value (L).

8. The method according to claims 7, wherein data stored in said portion (11) of non volatile memory (4) are moved into a different portion of non volatile memory, said different portion being associated to the first counter (11, 12, 13, 14) having a value not exceeding said predetermined value (L), preferably to the first counter (11, 12, 13, 14) associated with a lower value (50).

9. IC Card (10) including a non volatile memory (4) and a first counter (21) for counting write accesses to a portion (11) of said non volatile memory (4), said first counter (21) being stored in another portion (21) of said non volatile memory (4), the IC Card comprising a second counter or value (31) coupled to the first counter (21) and stored into a RAM (4), Random Access Memory, of the IC Card (10), and an update logic which updates the second counter or value (31) each time said write accesses occur and which writes said first counter (21) only when said second counter or value (31) corresponds to a predetermined value.

10. IC Card according to claim 9 wherein said update logic comprises incrementing a value of the second counter (31) from a lower value (x) to an upper value (y) or decrementing the value from an upper value (y) to a lower value (x), and writing the first counter (21) when the second counter (31) corresponds to said upper value (y) or the lower value (x), respectively.

11. IC Card (10) according to claim 10, wherein said value (31) is set from 1 to n and a number of writings of said first counter (21) in said another portion of non volatile memory (4) is 1 / n times a number of updates of said value (31).

12. IC Card according to claim 9, wherein said update logic comprises selecting a value among a prescribed plurality of values, and writing the first counter (21) when the selected value (31) corresponds to one of said prescribed plurality of values.

13. IC Card according to claim 12, wherein said update logic includes a random generator of a value 1..m for said value (31).

14. IC Card according to claims 9-13, wherein each memory cell or portion (11, 12, 13, 14) of said non volatile memory (4) is associated to a corresponding first counter (21, 22, 23, 24) in said non volatile memory (4) and to a second counter or value (31, 32, 33, 34) in RAM (5) coupled to the corresponding first counter (21, 22, 23, 24).

15. IC Card according to claim 14 wherein including a comparator having in input said the first counter (21) and a predetermined value which is associated to a limit of writing cycles supported by said portion (11) of non volatile memory (4) and a trigger of a warning on a maximum data update on said portion (11) which is activated if said first counter (21) exceeds said predetermined value.

## Patentansprüche

1. Verfahren zum Beaufsichtigen einer Anzahl von durch einen Bereich (11) eines nichtflüchtigen Speichers (4) einer Karte (10) unterstützten Schreibzyklen, mit den Schritten:
des Zählens von Schreibzugriffen auf den Bereich des nichtflüchtigen Speichers (11) und
des Speicherns eines ersten Zählers (21) der Schreibzugriffe in einem anderen Bereich (21) des nichtflüchtigen Speichers,
wobei der erste Zähler (21) mit einem zweiten Zähler oder Wert (31) gekoppelt ist, der in einem RAM (5), Speicher mit wahlfreiem Zugriff, der Karte gespeichert wird,
wobei der zweite Zähler oder Wert (31) jedesmal aktualisiert wird, wenn Schreibzugriffe auf den zu steuernden Bereich des nichtflüchtigen Speichers (11) auftreten,
**dadurch gekennzeichnet, dass**
die Karte eine IC-Karte ist, und dadurch, dass
der erste Zähler (21) nur dann in einen anderen Bereich des nichtflüchtigen Speichers (4) geschrieben wird, wenn der zweite Zähler oder Wert (31) einem vorbestimmten Wert entspricht.

2. Verfahren nach Anspruch 1, wobei das Aktualisieren des zweiten Zählers (31) das Erhöhen eines Wertes des zweiten Zählers (31) von einem niedrigeren Wert (x) zu einem höheren Wert (y) oder das Vermindern des Wertes von einem höheren Wert (y) auf einen niedrigeren Wert (x) umfasst, wobei der vorbestimmte Wert dem höheren Wert (y) beziehungsweise dem niedrigeren Wert (x) entspricht.

3. Verfahren nach Anspruch 2, wobei der zweite Zähler (31) von 1 bis n zählt und eine Anzahl von Schreibvorgängen des ersten Zählers (21) in dem anderen Bereich des nichtflüchtigen Speichers das 1/n-Fache einer Zahl von Aktualisierungen des zweiten Zählers (31) beträgt.

4. Verfahren nach Anspruch 1, wobei das Aktualisieren des Wertes (31) das Auswählen eines Wertes aus einer vorgeschriebenen Mehrzahl von Werten umfasst, wobei das Schreiben des ersten Zählers (21) auslösende vorbestimmte Wert eine der vorgeschriebenen mehreren Werte ist.

5. Verfahren nach Anspruch 4,
wobei der Wert (31) zufällig aus m Werten der vorgeschriebenen Mehrzahl von Werten (1 ... m) selektiert wird, und
wobei eine Anzahl an Schreibvorgängen des ersten Zählers (21) in den anderen Bereich des nichtflüchtigen Fehlers das 1/m-Fache einer Anzahl von Aktualisierungen des Wertes (31) ist.

6. Verfahren nach irgendeinem der vorstehenden Ansprüche,
wobei jede Speicherzelle oder jeder Bereich (11, 12, 13, 14) des nichtflüchtigen Speichers (4) mit einem entsprechenden ersten Zähler (21, 22, 23, 24) in dem nichtflüchtigen Speicher (4) verknüpft ist und
wobei ein zweiter Zähler oder Wert (31, 32, 33, 34) im RAM (5) mit dem entsprechenden ersten Zähler (21, 22, 23, 24) zum Beaufsichtigen einer Anzahl von durch den nichtflüchtigen Speicher (4) unterstützten Schreibzyklen gekoppelt ist.

7. Verfahren nach irgendeinem der vorstehenden Ansprüche,
wobei der erste Zähler (21) mit einem vorbestimmten Wert (L) verglichen wird, welcher mit einer Schranke für durch den Bereich (11) des nichtflüchtigen Speichers (4) unterstützte Schreibzyklen verknüpft ist, und
wobei eine Warnung wegen einer maximalen Anzahl von Datenaktualisierungen in dem Bereich (11) durch eine Applikation oder ein Betriebssystem auf der IC-Karte (10) ausgelöst wird, ob der erste Zähler (21) den vorbestimmten Wert (L) überschreitet.

8. Verfahren nach Anspruch 7,
wobei die in dem Bereich (11) des nichtflüchtigen Speichers (4) gespeicherten Daten in einen unterschiedlichen Bereich des nichtflüchtigen Speichers verschoben werden,
wobei der andere Bereich mit dem ersten Zähler (11, 12, 13, 14) verknüpft ist, welcher einen Wert aufweist, der den vorbestimmten Wert (L) nicht überschreitet, vorzugsweise mit dem ersten Zähler (11, 12, 13, 14), der mit einem niedrigeren Wert (50) verknüpft ist.

9. IC-Karte (10) mit
einem nichtflüchtigen Speicher (4) und
mit einem ersten Zähler (21) zum Zählen von Schreibzugriffen auf einen Bereich (11) des nichtflüchtigen Speichers (4),
wobei der erste Zähler (21) in einem anderen Bereich (21) des nichtflüchtigen Speichers (4) gespeichert wird,
wobei die IC-Karte einen mit dem ersten Zähler (21) verknüpften und in einem RAM (4), Speicher mit wahlfreiem Zugriff, der IC-Karte (10) gespeicherten zweiten Zähler oder Wert (31) aufnimmt, und
mit einr Aktualisierungs-Logik, die den zweiten Zähler oder Wert (31) jedes Mal aktualisiert, wenn der Schreibzugriff auftritt und die den ersten Zähler (21) nur dann schreibt, wenn der zweite Zähler oder Wert (31) einem vorbestimmten Wert entspricht.

10. IC-Karte nach Anspruch 9, wobei die Aktualisierungs-Logik
das Erhöhen eines Wertes des zweiten Zählers (31) von einem niedrigeren Wert (x) auf einen höheren Wert (y) oder das Vermindern des Wertes von einem höheren Wert (y) auf einen niedrigeren Wert (x), und
das Schreiben des ersten Zählers (21), wenn der zweite Zähler (31) dem höheren Wert (y) beziehungsweise dem niedrigeren Wert (x) entspricht, umfasst.

11. IC-Karte (10) nach Anspruch 10, wobei der Wert (31) von 1 bis n gesetzt wird und eine Anzahl von Schreibvorgängen des ersten Zählers (21) in dem anderen Bereich des nichtflüchtigen Speichers (4) das 1/n-Fache einer Zahl von Aktualisierungen des Wertes (31) beträgt.

12. IC-Karte nach Anspruch 9, wobei die Aktualisierungs-Logik das Auswählen eines Wertes aus einer vorgeschriebenen Mehrzahl von Werten und das Schreiben des ersten Zählers (21) umfasst, wenn der ausgewählte Wert (31) einem der vorgeschriebenen Werte aus der Mehrzahl von Werten entspricht.

13. IC-Karte nach Anspruch 12, wobei die Aktualisierungs-Logik einen Zufallsgenerator eines Wertes 1 ... m für den Wert (31) umfasst.

14. IC-Karte nach Anspruch 9 bis 13, wobei jede Speicherzelle oder jeder Speicherbereich (11, 12, 13, 14) des nichtflüchtigen Speichers (4) mit einem entsprechenden ersten Zähler (21, 22,23, 24) in dem nichtflüchtigen Speicher (4) und mit einem mit dem entsprechenden ersten Zähler (21, 22, 23, 24) gekoppelten zweiten Zähler oder Wert (31, 32, 33, 34) im RAM (5) verknüpft ist.

15. IC-Karte nach Anspruch 14,
mit einem Komparator, an dessen Eingang der erste Zähler (21) und ein vorbestimmter Wert, der mit einer Schranke an durch den Bereich (11) des nichtflüchtigen Speichers (4) unterstützten Schreibzyklen verknüpft ist, anliegen, und
mit einem Warnungs-Auslöser, bei einer maximalen Datenaktualisierung in dem Bereich (11), der aktiviert wird, wenn der erste Zähler (21) den vorbestimmten Wert überschreitet.

## Revendications

1. Procédé de commande du nombre de cycles d'écriture supporté par une partie (11) d'une mémoire non volatile (4) d'une carte (10), comprenant les étapes consistant à compter les accès en écriture dans ladite partie de ladite mémoire non volatile (11) et à mémoriser un premier compteur (21) desdits accès en écriture dans une autre partie (21) de ladite mémoire non volatile, dans lequel ledit premier compteur (21) est couplé à un deuxième compteur ou valeur (31) mémorisé(e) dans une RAM (5), ou mémoire vive, de ladite carte, dans lequel le deuxième compteur ou valeur (31) est actualisé(e) à chaque fois que lesdits accès en écriture se produisent sur ladite partie de ladite mémoire non volatile (11) à commander, **caractérisé en ce que** ladite carte est une carte à puce, et **en ce que** ledit premier compteur (21) est écrit dans ladite autre partie de la mémoire non volatile (4) seulement lorsque ledit deuxième compteur ou valeur (31) correspond à une valeur prédéterminée.

2. Procédé selon la revendication 1, dans lequel ladite actualisation du deuxième compteur (31) comprend le fait d'incrémenter une valeur du deuxième compteur (31) d'une valeur inférieure (x) à une valeur supérieure (y) ou de décrémenter la valeur d'une valeur supérieure (y) à une valeur inférieure (x), ladite valeur prédéterminée correspondant respectivement à la valeur supérieure (y) ou à la valeur inférieure (x).

3. Procédé selon la revendication 2, dans lequel ledit deuxième compteur (31) compte de 1 à n, et un nombre d'écritures dudit premier compteur (21) dans ladite autre partie de la mémoire non volatile vaut 1/n fois un nombre d'actualisations dudit deuxième compteur (31).

4. Procédé selon la revendication 1, dans lequel l'actualisation de ladite valeur (31) comprend la sélection d'une valeur parmi une pluralité de valeurs prescrites, dans lequel la valeur prédéterminée qui déclenche l'écriture dudit premier compteur (21) est l'une desdites valeurs prescrites.

5. Procédé selon la revendication 4, dans lequel ladite valeur (31) est choisie au hasard parmi m valeurs de ladite pluralité de valeurs prescrites (1...m), et un nombre d'écritures dudit premier compteur (21) dans ladite autre partie de la mémoire non volatile vaut 1/m fois un nombre d'actualisations de ladite valeur (31).

6. Procédé selon l'une quelconque des revendications précédentes, dans lequel chaque cellule ou partie de mémoire (11, 12, 13, 14) de ladite mémoire non volatile (4) est associée à un premier compteur correspondant (21, 22, 23, 24) dans ladite mémoire non volatile (4) et un deuxième compteur ou valeur (31, 32, 33, 34) dans la RAM (5) est couplé(e) au premier compteur correspondant (21, 22, 23, 24), pour commander un nombre de cycles d'écriture supporté par la mémoire non volatile (4).

7. Procédé selon l'une quelconque des revendications précédentes, dans lequel on compare le premier compteur (21) avec une valeur prédéterminée (L) qui est associée à une limite de cycles d'écriture supportés par ladite partie (11) de la mémoire non volatile (4) et une alarme sur une actualisation de données maximum sur ladite partie (11) est déclenchée par une application ou un système fonctionnel de ladite carte à puce (10), si ledit premier compteur (21) dépasse ladite valeur prédéterminée (L).

8. Procédé selon la revendication 7, dans lequel les données mémorisées dans ladite partie (11) de la mémoire non volatile (4) sont déplacées dans une partie différente de la mémoire non volatile, ladite partie différente étant associée au premier compteur (11, 12, 13, 14) ayant une valeur qui ne dépasse pas ladite valeur prédéterminée (L), de préférence au premier compteur (11, 12, 13, 14) associé à une valeur inférieure (50).

9. Carte à puce (10) comprenant une mémoire non volatile (4) et un premier compteur (21) pour compter les accès en écriture dans une partie (11) de ladite mémoire non volatile (4), ledit premier compteur (21) étant stocké dans une autre partie (21) de ladite mémoire non volatile (4), la carte à puce comprenant un deuxième compteur ou valeur (31) couplé(e) au premier compteur (21) et stocké dans une RAM (4), ou mémoire vive, de la carte à puce (10), et une logique d'actualisation qui actualise le deuxième compteur ou valeur (31) à chaque fois que lesdits accès en écriture se produisent et qui écrit ledit premier compteur (21) seulement lorsque ledit deuxième compteur ou valeur (31) correspond à une valeur prédéterminée.

10. Carte à puce selon la revendication 9, dans laquelle ladite logique d'actualisation comprend l'incrémentation d'une valeur du deuxième compteur (31) d'une valeur inférieure (x) à une valeur supérieure (y) ou la décrémentation de la valeur d'une valeur supérieure (y) à une valeur inférieure (x), et l'écriture du premier compteur (21) quand le deuxième compteur (31) correspond respectivement à la valeur supérieure (y) ou à la valeur inférieure (x).

11. Carte à puce (10) selon la revendication 10, dans laquelle ladite valeur (31) vaut de 1 à n et un nombre d'écritures dudit premier compteur (21) dans ladite autre partie de la mémoire non volatile (4) vaut 1/n fois un nombre d'actualisations de ladite valeur (31).

12. Carte à puce selon la revendication 9, dans laquelle ladite logique d'actualisation comprend la sélection d'une valeur parmi une pluralité de valeurs prescrites, et l'écriture du premier compteur (21) quand la valeur choisie (31) correspond à l'une desdites valeurs prescrites.

13. Carte à puce selon la revendication 12, dans laquelle ladite logique d'actualisation comprend un générateur aléatoire d'une valeur 1...m pour ladite valeur (31).

14. Carte à puce selon les revendications 9 à 13, dans laquelle chaque cellule ou partie de mémoire (11, 12, 13, 14) de ladite mémoire non volatile (4) est associée à un premier compteur correspondant (21, 22, 23, 24) dans ladite mémoire non volatile (4) et à un deuxième compteur ou valeur (31, 32, 33, 34) dans la RAM (5) couplé(e) au premier compteur correspondant (21, 22, 23, 24).

15. Carte à puce selon la revendication 14, comprenant un comparateur ayant en entrée ledit premier compteur (21) et une valeur prédéterminée qui est associée à une limite de cycles d'écriture supportés par ladite partie (11) de la mémoire non volatile (4) et un déclenchement d'une alarme sur une actualisation de données maximum sur ladite partie (11) qui est activé si ledit premier compteur (21) dépasse ladite valeur prédéterminée.
